# EUROPEAN PATENT SPECIFICATION

(11) **EP 3 147 097 B1**
(45) Date of publication and mention of the grant of the patent: **09.01.2019**
(21) Application number: 16189868.9
(22) Date of filing: 21.09.2016
(51) Int. Cl.: B29C 45/17

(54) **INJECTION MOLDING MACHINE**
SPRITZGIESSMASCHINE
MACHINE DE MOULAGE À INJECTION

(30) Priority: 24.09.2015 JP 2015187322
(43) Date of publication of application: 29.03.2017
(73) Proprietor: SUMITOMO HEAVY INDUSTRIES, LTD., Tokyo 141-6025 (JP)
(72) Inventor: SAKAI, Kiminori, Kanagawa, 237-8555 (JP)
(74) Representative: Louis Pöhlau Lohrentz

(56) References cited:
- EP-A1- 2 767 381
- EP-A2- 1 275 486
- CN-B- 102 001 165
- JP-A- H0 924 527
- JP-A- 2009 248 464
- JP-A- 2010 082 630
- JP-A- 2010 099 702
- US-A1- 2010 055 228

## Description

### BACKGROUND OF THE INVENTION

### Field of the Invention

Certain embodiment of the present invention relates to an injection molding machine.

### Description of Related Art

An injection molding machine includes a mold clamping unit which performs closing, clamping, and opening of a mold unit. The mold unit is configured of a stationary mold and a movable mold. The clamping unit includes a stationary platen to which the stationary mold is attached, a movable platen to which the movable mold is attached, a toggle mechanism which moves the movable platen forward and backward with respect to the stationary platen, and a drive source which operates the toggle mechanism (refer to Japanese Unexamined Patent Application Publication No. 2012-166423).

The toggle mechanism is configured of a crosshead, a pair of link groups, or the like. Each link group includes a plurality of links which are bendably/strechably connected to each other by pins or the like. The drive source moves the crosshead forward and backward, and thus, bends and stretches the pair of link groups so as to move the movable platen forward and backward.

The toggle mechanism is disposed between a plurality of platens, and each of the platens includes a platen main body portion and a pair of link attachment portions. Each of the link attachment portions protrudes from the platen main body portion, and a link is attached to the tip portion of the link attachment portion to be able to freely oscillate.

In the related art, as for example disclosed in EP 1275486 A2, the pair of link attachment portions flexibly deforms greatly when the molds are clamped.

### SUMMARY OF THE INVENTION

The present invention is made in consideration of the above-described problem, and a main object thereof is to provide an injection molding machine in which flexible deformation of the pair of link attachment portions is prevented when a mold is clamped.

In order to solve the above-described problem, there is provided an injection molding machine according to claim 1.

According to an aspect of the present invention, it is possible to provide an injection molding machine in which flexible deformation of the pair of link attachment portions is prevented when a mold is clamped.

### BRIEF DESCRIPTION OF THE DRAWINGS

FIG. 1 is a view showing a state where mold opening in an injection molding machine according to an embodiment is completed.
FIG. 2 is a view showing a state where a mold in the injection molding machine according to the embodiment is clamped.
FIG. 3 is a view when a movable platen according to the embodiment is viewed from the rear side.
FIG. 4 is a sectional view of the movable platen taken along line IV-IV of FIG. 3.
FIG. 5 is a view when a movable platen according to a modification example is viewed from the rear side.
FIG. 6 is a sectional view of the movable platen taken along line VI-VI of FIG. 5, and is a sectional view showing a state where an ejector unit is attached to the movable platen.

### DETAILED DESCRIPTION OF THE INVENTION

Hereinafter, embodiments of the present invention will be described with reference to the drawings. In the drawings, the same reference numerals or the corresponding reference numeral are assigned to the same configurations or the corresponding configurations, and descriptions thereof are omitted.

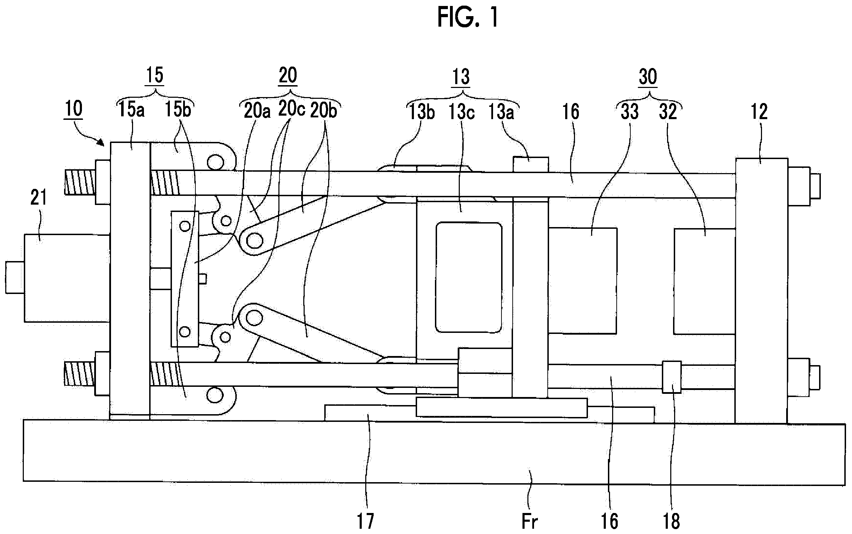

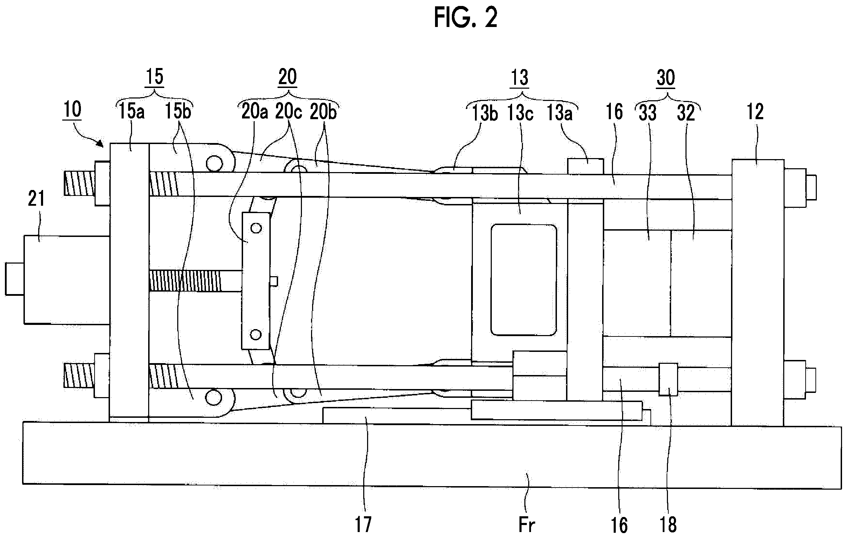

FIG. 1 is a view showing a state where mold opening in an injection molding machine according to an embodiment is completed. FIG. 2 is a view showing a state where a mold in the injection molding machine according to the embodiment is clamped. The injection molding machine includes a frame Fr, a mold clamping unit 10, and a controller. Hereinafter, a movement direction (right in FIG. 1) of the movable platen 13 when a mold is closed is defined as a front side, and a movement direction (left in FIG. 1) of the movable platen 13 when a mold is open is defined as a rear side.

The mold clamping unit 10 performs closing, clamping, and opening of a mold unit 30. The mold clamping unit 10 includes a stationary platen 12, the movable platen 13, a support platen 15, a tie bar 16, a toggle mechanism 20, a mold clamping motor 21, and a movement conversion mechanism.

The stationary platen 12 is fixed to the frame Fr. A stationary mold 32 is attached to a surface of the stationary platen 12 facing the movable platen 13.

The movable platen 13 is movable along a guide (for example, guide rail) 17 installed on the frame Fr, and can move backward with respect to the stationary platen 12. A movable mold 33 is attached to a surface of the movable platen 13 facing the stationary platen 12.

The movable platen 13 moves forward and backward with respect to the stationary platen 12, and thus, opening, clamping, and closing of the mold are performed. The mold unit 30 is configured of the stationary mold 32 and the movable mold 33.

The support platen 15 is connected to the stationary platen 12 at an interval, and is placed on the frame Fr so as to be movable in the mold opening and closing direction. In addition, the support platen 15 may be movable along a guide which is installed on the frame Fr. The guide of the support platen 15 may be also used as the guide 17 of the movable platen 13.

In addition, in the present embodiment, the stationary platen 12 is fixed to the frame Fr, and the support platen 15 is movable in the mold opening and closing direction with respect to the frame Fr. However, the support platen 15 may be fixed to the frame Fr, and the stationary platen 12 may be movable in the mold opening and closing direction with respect to the frame Fr.

The stationary platen 12 and the support platen 15 are connected to each other at an interval by the tie bar 16. A plurality of tie bars 16 may be used. The tie bars 16 are parallel in the mold opening and closing direction, and extend according to a mold clamping force. A mold clamping force detector 18 is provided in at least one tie bar 16. The mold clamping force detector 18 may be a strain gauge type detector, and detects strain of the tie bar 16 to detect the mold clamping force.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 moves the movable platen 13 with respect to the stationary platen 12. The toggle mechanism 20 is provided between the movable platen 13 and the support platen 15. The toggle mechanism 20 is configured of a crosshead 20a, a pair of link group, or the like. Each link group includes a plurality of links 20b and 20c which are bendably/strechably connected to each other by pins. The links 20b on one side are attached to be able to freely oscillate to the movable platen 13, and the links 20c on the other side are attached to be able to freely oscillate to the support platen 15. If the crosshead 20a moves backward, the links 20b and 20c are bent and stretched, and the movable platen 13 moves forward and backward.

The mold clamping motor 21 operates the toggle mechanism 20. The mold clamping motor 21 moves the crosshead 20a forward and backward, the links 20b and 20c are bent and stretched, and the movable platen 13 moves forward and backward. The movement conversion mechanism, which converts a rotational motion of the mold clamping motor 21 into a linear motion and transmits the linear motion to the crosshead 20a, is provided between the mold clamping motor 21 and the crosshead 20a. For example, the movement conversion mechanism is a ball screw mechanism.

The operation of the mold clamping unit 10 is controlled by the controller. The controller includes a central processing unit (CPU), and a recording medium such as a memory. The controller carries out a program stored in the recording medium using the CPU, and thus, controls a mold opening process, a mold clamping process, a mold opening process, or the like.

In the mold closing process, the mold clamping motor 21 is driven to move the movable platen 13 forward, and thus, the movable mold 33 comes into contact with the stationary mold 32.

In the mold clamping process, the mold clamping motor 21 is further driven, and thus, a mold clamping force is generated. When the mold is clamped, a cavity space is formed between the movable mold 33 and the stationary mold 32, and the cavity space is filled with a liquid molding material. The molding material inside the cavity space is solidified and becomes a molding product.

In the mold opening process, the mold clamping motor 21 is driven to move the movable platen 13 backward, and thus, the movable mold 33 is separated from the stationary mold 32.

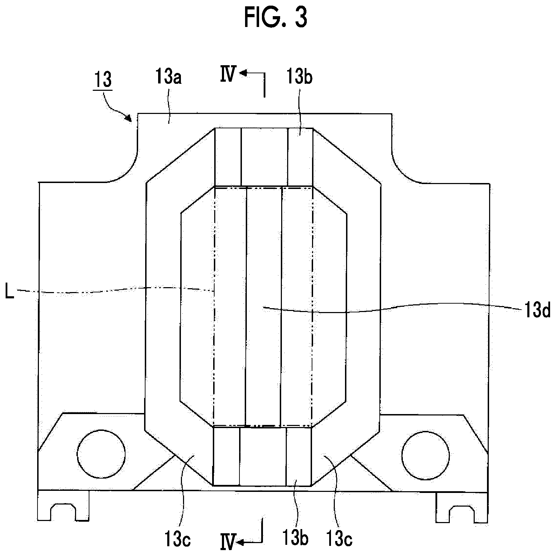

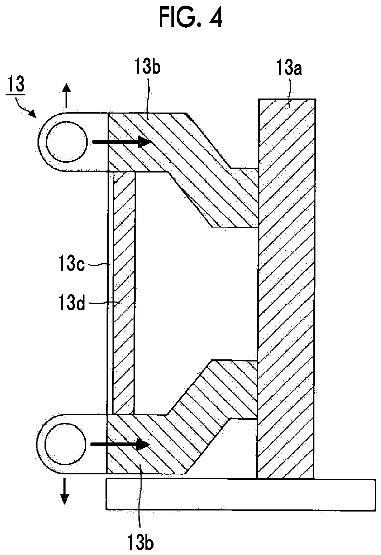

FIG. 3 is a view when a movable platen according to the embodiment is viewed from the rear side. FIG. 4 is a sectional view of the movable platen taken along line IV-IV of FIG. 3. In FIG. 4, arrows indicate a component parallel to the mold opening and closing direction and a component parallel to the vertical direction, and the components are divided from force acting on the link attachment portions when a mold is clamped.

The movable platen 13 includes a movable platen main body portion 13a, a pair of link attachment portions 13b, and a pair of frame formation portions 13c.

For example, the movable platen main body portion 13a is formed in a plate shape. The movable mold 33 is attached to a surface of the movable platen main body portion 13a facing the stationary platen 12. A through hole through which the tie bar 16 passes, a notch for avoiding the tie bar 16, or the like is formed on the movable platen main body portion 13a.

The link attachment portions 13b protrude from the movable platen main body portion 13a toward the side opposite to the movable mold 33, and the links 20b of the toggle mechanism 20 are attached to the tip portions of the link attachment portions 13b. For example, pins are used for this attachment, and pin holes corresponding to the pins are formed on the tip portions of the link attachment portions 13b.

As shown in FIG. 4, the link attachment portions 13b may be bent midway, and the base end portions of the link attachment portion 13b may be closer to the center line of the movable platen main body portion 13a than the tip portions of the link attachment portions 13b. When a mold is clamped, since the center portion of the movable platen main body portion 13a is concentratedly pressed and the outer peripheral portion of the movable platen main body portion 13a protruding from the movable mold 33 is hardly pressed, it is possible to prevent flexible deformation of the movable platen main body portion 13a.

In addition, in the present embodiment, the link attachment portions 13b are bent midway. However, the link attachment portions 13b may straightly protrude backward.

As shown in FIG. 3, the pair of link attachment portions 13b is interposed between the frame formation portions 13c, and the frame formation portions 13c form a frame along with the pair of link attachment portions 13b. A component such as an ejector unit (not shown) can be accommodated inside the frame. The ejector unit ejects a molding product from the movable mold 33.

As described above, the mold clamping motor 21 moves the crosshead 20a forward and backward, and thus, the links 20b and 20c are bent and stretched, and the movable platen 13 moves with respect to the support platen 15. Accordingly, as shown by arrows parallel in the vertical direction in FIG. 4, when a mold is clamped, forces opposite to each other act on the pair of link attachment portions 13b. For example, outward forces may act on the pair of link attachment portions 13b when a mold is clamped. In addition, inward forces may act on the pair of link attachment portions 13b when a mold is clamped. Meanwhile, in a case where the center portion of the movable platen main body portion 13a is concentratedly pressed when a mold is clamped, outward forces are likely to act on the pair of link attachment portions 13b.

In order to prevent flexible deformation of the pair of link attachment portions 13b when a mold is clamped, the movable platen 13 includes a transmission portion 13d. In addition, the transmission portion 13d in the present embodiment is provided as a portion of the movable platen 13. However, the transmission portion 13d may be provided separately from the movable platen 13.

As shown in FIG. 3, the transmission portion 13d is provided so as to overlap a straight line L which connects the pair of the link attachment portions 13b to each other when viewed in the mold opening and closing direction. The thickness of the straight line L may be the same as the thickness of the link attachment portion 13b, and preferably, the transmission portion 13d is provided to overlap at least a portion of the straight line L. In addition, in FIG. 3, one transmission portion 13d is provided. However, a plurality of transmission portions 13d may be provided.

The transmission portion 13d transmits forces in opposite directions acting on the pair of link attachment portions 13b when the mold is clamped to a portion between the pair of link attachment portions 13b so as to cancel out the forces, and thus, suppresses the forces. Accordingly, it is possible to prevent the flexible deformation of the pair of link attachment portions 13b. As a result, molding failure is reduced, and thus, it is possible to prevent a decrease in mold clamping performance.

The transmission portion 13d suppresses outward forces acting on the pair of link attachment portions 13b when a mold is clamped. For example, the transmission portion 13d suppresses an upward force acting on the upper link attachment portion 13b when a mold is clamped, and suppresses a downward force acting on the lower link attachment portion 13b when a mold is clamped.

In addition, the transmission portion 13d may suppress inward forces acting on the pair of link attachment portions 13b when a mold is clamped. In this case, the transmission portion 13d suppresses a downward force acting on the upper link attachment portion 13b when a mold is clamped, and suppresses an upward force acting on the lower link attachment portion 13b when a mold is clamped.

In addition, the transmission portion 13d of the present embodiment suppresses both the outward force and the inward force. However, the transmission portion 13d may suppress only one thereof. The transmission portion 13d may suppress both the outward force and the inward force or may suppress only one thereof as long as it suppresses forces opposite to each other acting on the pair of link attachment portions 13b when a mold is clamped.

As shown in FIG. 4, the transmission portion 13d may connect the tip portions of the pair of link attachment portion 13b. It is possible to prevent flexible deformation of the pair of link attachment portions 13b.

As shown in FIG. 4, the transmission portion 13d may be provided forward from the rear end surfaces of the pair of frame formation portions 13c, and may be disposed inside the frame which is configured of the pair of frame formation portions 13c and the pair of link attachment portions 13b. In addition, the transmission portion 13d may be fixed to the rear end surfaces of the pair of frame formation portions 13c, and may be disposed outside the frame which is configured of the pair of frame formation portions 13c and the pair of link attachment portions 13b.

For example, the transmission portion 13d is formed separately from the pair of link attachment portions 13b, and is attached to the pair of link attachment portions 13b. The transmission portion 13d is fixed to the pair of link attachment portions 13b by a bolt or the like.

In FIG. 4, the transmission portion 13d is provided between the pair of link attachment portions 13b. However, the transmission portion 13d may be provided so as to protrude outward from the pair of link attachment portions 13b.

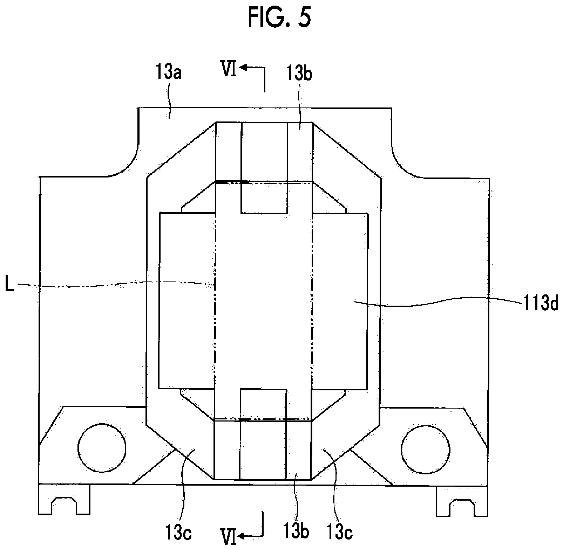

In addition, in the present embodiment, the transmission portion 13d is fixed to the link attachment portion 13b by a bolt or the like. However, the transmission portion 13d may not be fixed to the link attachment portion 13b. The transmission portion 13d may be fixed or may not be fixed as long as the transmission portion 13d can transmit forces in opposite directions acting on the pair of link attachment portions 13b when a mold is clamped to the portion between the pair of link attachment portions 13b. Hereinafter, a modification example of the transmission portion 13d will be described. However, this modification example can be applied to a transmission portion 113d shown in FIG. 5 or the like.

For example, the transmission portion 13d may be attached to the link attachment portions 13b by pins or the like. The pins may be perpendicular to the straight line L. As the pins, the pins by which the links 20b are attached to the link attachment portions 13b may be used. Accordingly, it is possible to reduce the number of components.

In addition, the transmission portion 13d may be fitted to the link attachment portions 13b. For example, a keyway may be formed on one of the link attachment portion 13b and the transmission portion 13d, and a key fitted to the key way may be formed on the other. The keyway or the like maybe perpendicular to the straight line L.

In addition, the transmission portion 13d may be only in contact with the pair of link attachment portions 13b. For example, the transmission portion 13d may be configured of a rod-shaped portion which passes through the pair of link attachment portion 13b, and flange sections which are provided on both ends of the rod-shaped portions. The flange sections are in contact with the link attachment portions 13b. In this case, the transmission portion 13d suppresses only the outward forces of the outward forces and the inward forces.

Moreover, in the present embodiment, the transmission portion 13d is formed separately from the pair of link attachment portions 13b. However, the transmission portion 13d may be integrally formed of the same material as those of the pair of link attachment portions 13b.

As shown in FIG. 3, when viewed in the mold opening and closing direction, the transmission portion 13d is disposed between the pair of frame formation portions 13c and is disposed at intervals from the pair of frame formation portions 13c. The transmission portion 13d is formed in a beam shape. However, the transmission portion 13d may be formed in a plate shape.

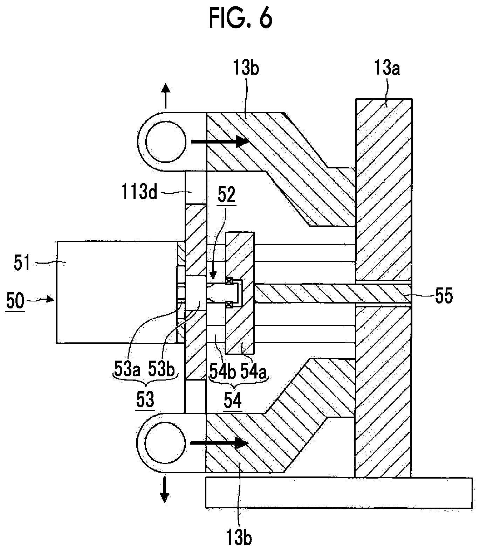

FIG. 5 is a view when a movable platen according to a modification example is viewed from the rear side. FIG. 6 is a sectional view of the movable platen taken along line VI-VI of FIG. 5, and is a sectional view showing a state where an ejector unit is attached to the movable platen. In FIG. 6, arrows indicate a component parallel to the mold opening and closing direction and a component parallel to the vertical direction, and the components are divided from force acting on the link attachment portions when a mold is clamped.

The transmission portion 113d shown in FIGS. 5 and 6 is used instead of the transmission portion 13d shown in FIGS. 3 and 4.

As shown in FIG. 5, the transmission portion 113d is provided so as to overlap a straight line L which connects the pair of the link attachment portions 13b to each other when viewed in the mold opening and closing direction. The thickness of the straight line L may be the same as the thickness of the link attachment portion 13b, and preferably, the transmission portion 113d is provided to overlap at least a portion of the straight line L.

The transmission portion 113d transmits forces in opposite directions acting on the pair of link attachment portions 13b when the mold is clamped to the portion between the pair of link attachment portions 13b so as to cancel out the forces, and thus, suppresses the forces. Accordingly, it is possible to prevent the flexible deformation of the pair of link attachment portions 13b. As a result, molding failure is reduced, and thus, it is possible to prevent a decrease in mold clamping performance.

The transmission portion 113d suppresses outward forces acting on the pair of link attachment portions 13b when a mold is clamped. For example, the transmission portion 113d suppresses the upward force acting on the upper link attachment portion 13b when a mold is clamped, and suppresses the downward force acting on the lower link attachment portion 13b when a mold is clamped.

In addition, the transmission portion 113d may suppress inward forces acting on the pair of link attachment portions 13b when a mold is clamped. Inthiscase, the transmission portion 113d suppresses the downward force acting on the upper link attachment portion 13b when a mold is clamped, and suppresses the upward force acting on the lower link attachment portion 13b when a mold is clamped.

In addition, the transmission portion 113d of the present embodiment suppresses both the outward force and the inward force . However, the transmission portion 113d may suppress only one thereof. The transmission portion 113d may suppress both the outward force and the inward force or may suppress only one thereof as long as it suppresses forces opposite to each other acting on the pair of link attachment portions 13b when a mold is clamped.

As shown in FIG. 6, the transmission portion 113d may connect the tip portions of the pair of link attachment portion 13b to each other. It is possible to prevent flexible deformation of the pair of link attachment portions 13b.

The transmission portion 113d is fixed to the link attachment portion 13b by a bolt or the like. However, the transmission portion 113d may not be fixed to the link attachment portion 13b. The transmission portion 113d may be fixed or may not be fixed as long as the transmission portion 113d can transmit forces in opposite directions acting on the pair of link attachment portions 13b when a mold is clamped to the portion between the pair of link attachment portions 13b.

As shown in FIG. 5, the transmission portion 113d is formed in a plate shape, and may be suspended at the pair of frame formation portions 13c. The transmission portion 113d may be fixed to the pair of frame formation portions 13c by a bolt or the like.

As shown in FIG.5, the transmission portion 113d may be fixed to the rear end surfaces of the pair of frame formation portions 13c, and may be disposed outside the frame which is configured of the pair of frame formation portions 13c and the pair of link attachment portions 13b. In addition, the transmission portion 113d may be provided forward from the rear end surfaces of the pair of frame formation portions 13c, and may be disposed inside the frame which is configured of the pair of frame formation portions 13c and the pair of link attachment portions 13b.

A component such as the ejector unit 50 is attached to the transmission portion 113d. Accordingly, since a dedicated component for attaching the component such as the ejector unit 50 to the movable platen 13 is not required, it is possible to reduce the number of components.

The ejector unit 50 ejects a molding product from the movable mold 33. For example, the ejector unit 50 includes an ejector motor 51, a movement conversion mechanism 52, and an ejector rod 55.

The ejector motor 51 is attached to the transmission portion 113d, and is directly connected to the movement conversion mechanisms 52. In addition, the ejector motor 51 may be attached to the movable platen main body portion 13a or the like, and may be connected to the movement conversion mechanism 52 via a belt, pulley, or the like.

The movement conversion mechanism 52 converts a rotational motion of the ejector motor 51 into a linear motion of the ejector rod 55. For example, the movement conversion mechanism 52 includes a first movement conversion section 53 and a second movement conversion section 54.

The first movement conversion section 53 converts a rotational motion into a rotary linear motion. For example, the first movement conversion section 53 is configured of a ball screw mechanism. The ball screw mechanism includes a ball screw shaft 53a and a ball screw nut 53b. The ball screw shaft 53a is spline-connected to a rotator of the ejector motor 51, and the ball screw nut 53b is fixed to the transmission portion 113d. The rotation motion of the ejector motor 51 is converted into a rotary linear motion of the ball screw shaft 53a.

The second movement conversion section 54 converts a rotary linear motion to a linear motion. For example, the second movement conversion section 54 is configured of a bearing holder 54a, a guide 54b, or the like. The bearing holder 54a holds a bearing which rotatably supports the tip portion of the ball screw shaft 53a. The guide 54b is fixed to the transmission portion 113d, guides the bearing holder 54a in front and rear directions, and limits the rotation of the bearing holder 54a. The rotary linear motion of the ball screw shaft 53a is converted into a linear motion of the bearing holder 54a.

In addition, the movement conversion mechanism 52 of the present embodiment includes the first movement conversion section 53 and the second movement conversion section 54. However, the present invention is not limited to this. The movement conversion mechanism 52 may be any mechanism as long as it converts the rotation motion of the ejector motor 51 into the linear motion of the ejector rod 55.

The ejector rod 55 is attached to the bearing holder 54a and moves forward and backward along with the bearing holder 54a. The ejector rod 55 is inserted into the through hole of the movable platen 13, and if the ejector rod 55 moves forward, a molding product is ejected from the movable mold 33. After the molding product is ejected, the ejector rod 55 moves backward to the original position.

The operation of the ejector unit 50 is controlled by the controller.

Hereinbefore, the embodiment and modification example of the injection molding machine is described. However, the present invention is not limited to the embodiment and modification example, and various modifications and improvements may be applied within a concept of the present invention which is described in claims.

For example, as shown in FIGS. 1 and 2, the support platen 15 includes the support platen main body portion 15a and the pair of link attachment portions 15b. The link attachment portions 15b protrude from the support platen main body portion 15a, and links 20c of the toggle mechanism 20 are attached to be able to freely oscillate to the tip portions of the link attachment portions 15b. Accordingly, in order to prevent the flexible deformation of the pair of link attachment portions 15b, the transmission portion (not shown) may be provided, which overlaps the straight line connecting the pair of link attachment portions 15b when viewed in the mold opening and closing direction and transmits forces in opposite directions acting on the pair of link attachment portions 15b when a mold is clamped to the portion between the pair of link attachment portions 15b. In a case of a horizontal type mold clamping unit, the present invention may be applied to at least one of the movable platen 13 and the support platen 15.

In addition, the mold clamping unit 10 of the above-described embodiment is a horizontal type mold clamping unit in which the mold opening and closing direction is the horizontal direction. However, the mold clamping unit 10 may be a vertical type molding clamping unit in which the mold opening and closing direction is the vertical direction. For example, the vertical type mold clamping unit includes a lower platen serving as a stationary platen, an upper platen serving as a movable platen, a support platen, a toggle mechanism, a tie bar, or the like. A lower mold is attached to the lower platen and an upper mold is attached to the upper platen. The upper mold and the lower mold configure a mold unit. The support platen is disposed below the lower platen, and is lifted and lowered along with the upper platen. The toggle mechanism is disposed between the support platen and the lower platen. The tie bars are parallel to each other in the vertical direction, penetrates the lower platen, and connects the upper platen and the support platen to each other. In the case of the vertical type mold clamping unit, preferably, the present invention is applied to at least one of the lower platen and the support platen. Preferably, the present invention is applied to the link attachment portion of the platens to which the toggle mechanism is connected.

## Claims

1. An injection molding machine, comprising:
a platen main body portion (13a);
a pair of link attachment portions (13b) which protrudes from the platen main body portion (13a) and each includes a top portion to which a link of a toggle mechanism (20) is attached;
a transmission portion (13d) which overlaps a straight line (L) which connects the pair of link attachment portions (13b) to each other when viewed in a mold opening and closing direction, and transmits forces in opposite directions acting on the pair of link attachment portions (13b) when a mold is clamped to a portion between the pair of link attachment portions (13b); wherein
a pair of frame formation portions (13c) which are disposed in a state where the pair of link attachment portions (13b) is interposed therebetween, and form a frame along with the pair of link attachment portions (13b), wherein the transmission portion (13d) is suspended at the pair of frame formation portions (13c) .

2. The injection molding machine according to claim 1,
wherein the transmission portion (13d) suppresses an outward force acting on the pair of link attachment portions (13b) when a mold is clamped.

3. The injection molding machine according to any one of claims 1 to 2, further comprising:
an ejector unit (50) which ejects a molding product from a mold,
wherein a component of the ejector unit (50) is attached to the transmission portion (13d).

## Patentansprüche

1. Spritzgießmaschine, die Folgendes umfasst:
einen Plattenhauptkörperabschnitt (13a);
ein Paar Bindegliedbefestigungsabschnitte (13b), das von dem Plattenhauptkörperabschnitt (13a) vorsteht und jeweils einen oberen Abschnitt umfasst, an dem ein Bindeglied eines Kniehebelmechanismus (20) befestigt ist;
einen Übertragungsabschnitt (13d), der eine gerade Linie (L) überlappt, die das Paar Bindegliedbefestigungsabschnitte (13b) in einer Richtung des Öffnens und Schließens der Form gesehen miteinander verbindet, und Kräfte in entgegensetzte Richtungen überträgt, die auf das Paar Bindegliedbefestigungsabschnitte (13b) wirken, wenn eine Form an einen Abschnitt zwischen dem Paar Bindegliedabschnitte (13b) geklemmt ist;
wobei
ein Paar Rahmenbildungsabschnitte (13c), die in einem Zustand angeordnet sind, in dem das Paar Bindegliedbefestigungsabschnitte (13b) dazwischen eingefügt ist, und zusammen mit dem Paar Bindegliedbefestigungsabschnitte (13b) einen Rahmen bilden, wobei der Übertragungsabschnitt (13d) an dem Paar Rahmenbildungsabschnitte (13c) aufgehängt ist.

2. Spritzgießmaschine nach Anspruch 1,
wobei der Übertragungsabschnitt (13d) eine nach außen gerichtete Kraft unterdrückt, die auf das Paar Bindegliedbefestigungsabschnitte (13b) wirkt, wenn eine Form eingespannt ist.

3. Spritzgießmaschine nach einem der Ansprüche 1 bis 2, die ferner Folgendes umfasst:
eine Auswerfereinheit (50), die ein Spritzgießerzeugnis aus einer Form auswirft,
wobei eine Komponente der Auswerfereinheit (5) am Übertragungsabschnitt (13d) befestigt ist.

## Revendications

1. Machine de moulage par injection comprenant :
une partie de corps principal de coulisseau (13a) ;
une paire de parties de fixation de liaison (13b) qui fait saillie de la partie de corps principal de coulisseau (13a) et chacune comprend une partie supérieure à laquelle une liaison d'un mécanisme à genouillère (20) est fixée ;
une partie de transmission (13d) qui recouvre une ligne droite (L) qui raccorde la paire de parties de fixation de liaison (13b) entre elles lorsqu'elles sont observées dans une direction d'ouverture et de fermeture de moule, et transmet les forces dans les directions opposées agissant sur la paire de parties de fixation de liaison (13b) lorsqu'un moule est serré sur une partie entre la paire de parties de fixation de liaison (13b) ;
dans laquelle :
une paire de parties de formation de bâti (13c) qui sont disposées dans un état dans laquelle la paire de parties de fixation de liaison (13b) est intercalée entre elles, et forment un bâti conjointement avec la paire de parties de fixation de liaison (13b), dans laquelle la partie de transmission (13d) est suspendue au niveau de la paire de parties de formation de bâti (13c).

2. Machine de moulage par injection selon la revendication 1,
dans laquelle la partie de transmission (13d) supprime une force extérieure agissant sur la paire de parties de fixation de liaison (13b) lorsqu'un moule est serré.

3. Machine de moulage par injection selon l'une quelconque des revendications 1 à 2, comprenant en outre :
une unité d'éjecteur (50) qui éjecte un produit de moulage d'un moule,
dans laquelle un composant de l'unité d'éjecteur (50) est fixé sur la partie de transmission (13d).
